# EUROPEAN PATENT APPLICATION

(11) **EP 1 518 778 A1**
(43) Date of publication of application: **30.03.2005**
(21) Application number: 04380184.4
(22) Date of filing: 21.09.2004
(51) Int. Cl.: B62D 13/06

(54) **Directional chassis for trailers**

(30) Priority: 26.09.2003 ES 200302219
(71) Applicant: Garcia Melendi, Cesar Ovidio, 33510 Asturias (ES)
(72) Inventor: Garcia Melendi, Cesar Ovidio, 33510 Asturias (ES)

(57) **Abstract**

Directional chassis for trailers. In order to be used on the road as a means of transport, it must be coupled to a tractor vehicle so as to be towed.

By means of using the lever (7) we get a couple of positions for its work:
■ In the first one, the structure (8) and the directional axis (14) form a rigid group; the wheels are kept in a parallel position to the trailer's longitudinal axis and its functioning on the road is the same one as any conventional trailer.
■ In the second position, the structure (8) and the directional axle (14) are joined by means of some elements which allow a certain oscillation between both elements; in this manner, we get the wheels to be in the precise angle that enables the trailer to follow the tractor vehicle's path during the use of the reverse gear.

## Description

### Aim of the invention

The device, which is described in this document, is a chassis for trailers. It is attachable to any motor vehicle of two or more axles which has a compatible coupling.

The chassis is provided with a series of parts, all of them are placed under the disposable load space so when properly coupled make the trailer's wheels be directed to follow the same path which describes the tractor vehicle.

### Background of the invention

Currently, the existing chassis are attached to the tractor vehicle by means of a simple joint. Therefore, its forward movement does not show any difficulty; however, when operating in reverse gear there are several difficulties as the trailer moves in the opposite direction to the tractor vehicle's path. Thus, it is necessary for the driver to have a remarkable skill in order to steer the vehicle plus trailer unit properly.

### Description of the invention

The chassis in question presents a device which enables two different positions.

In the first position, the trailer's directional axle turns itself into a fixed axle, keeping the wheels in a parallel position to the longitudinal axis. In this position, it behaves in exactly the same manner as a conventional trailer; being the aforementioned position the proper way for the forward gear.

It is in the second position where a major innovation is found. In this position, the new structure, which this chassis presents, makes the trailer's wheels be rightly positioned in order to describe the same radius of gyration as the tractor vehicle. This aspect is the main advantage from this new kind of chassis.

### Description of the elements in the chart

This is the listing of the parts which correspond to the attached chart:
1) Hole to fit bolts in (15).
2) Axle with arms.
3) Housing to adjust ball in (16).
4) Mounting for axles (2).
5) Connecting rod fixed to the axle (2).
6) Coupling bars.
7) Lever which moves the axles (2) by means of the bars (6).
8) Trailer chassis.
9) Cardan joint with a hole at the end to fit bolt in (17).
10) Ball and socket joints mounting in chassis.
11) Coupling bars between ball and socket joints (10) and steering necks (12).
12) Steering necks.
13) Ball and socket joints mounting in neck.
14) Trailer steering axle.
15) Bolt to fit in the hole (1).
16) Ball of coupling to the housing (3).
17) Bolt to fit in the hole from cardan joint (9).
18) Ball-bearing to roll across the guide (20).
19) Bar of coupling between steering necks (12).
20) Guide for ball-bearing (18).
21) Tractor vehicle coupler.

### Description of a preferable mode of realization

As it can be inferred from the chart, the chassis is made up of two parts which couple as it is pointed out.

The first one is the structure (8) together with the built-in parts these are the following ones:
■ The mountings (4) upon which the axles (2) turn. The holes (1-B) from the rear axle couple on the bolts (15-A).
■ The housings (3-A&B) which adjust to the balls (16-A&B) of both the tractor vehicle and the directional axle.
■ The lever (7).
■ The cardan joint with a hole (9), which couples on the bolt (17) of the directional axis.
■ The guide (20) on which the ball-bearing rolls (18).

The other part is the directional axle (14) which is made up of the following parts:
■ The steering necks (12).
■ The ball and socket joints mounting (13), where the coupling bars which join the two parts of the trailer are fixed.
■ Bar of coupling (19).
■ The bolts (15) and (17), the ball (16-B) and the ball-bearing (18).

On the other hand, the tractor vehicle must be supplied with the coupler (21) with one ball (16-A) and two bolts (15-B).

With these couplings, the chassis should be ready for its use forward, and it would behave in exactly the same manner as those ones which are currently available in the market.

In order to enable the reverse gear mode, we would have to use the lever (7) to uncouple the holes (1-B) from the bolts (15-A). At the same time, the holes (1-A) would couple into the bolts (15-B). Therefore, the cardan joint (9), the bars (11) and the rear axle (2) get the trailer's wheels to describe the same radius of gyration as the tractor vehicle. This makes this operation much easier.

### Industrial application

This invention is enabled to be used in the car industry, as regards road transport with vehicles made up of a tractor vehicle plus a trailer.

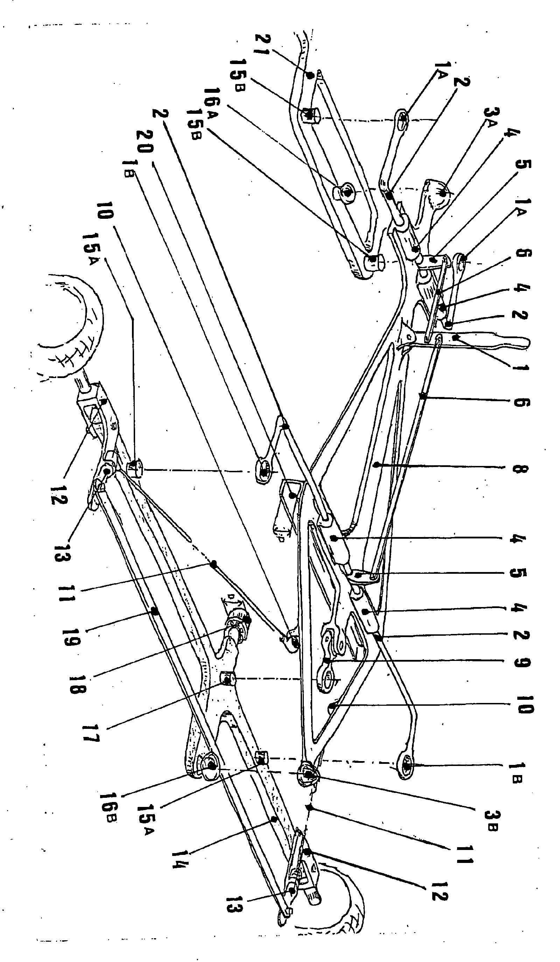

## Claims

1. Directional chassis for trailers which is **characterised by** the fact that the structure (8) and the directional axle (14) are joined together by means of the following parts: the cardan joint (9) which couples into the bolt (17), the ball (16) which is adjusted into the housing (3), the ball-bearing which rolls across the guide (20), the bars (11) which couple in the necks (12) as well as by means of the holes (1-B) which couple on the bolts (15-A) only when it is required.

2. Directional chassis, according to claim 1, **characterised by** the fact that the use of the lever (7) makes the axles turn (2). Therefore, when the holes (1-A) join the bolts (15-B), the holes (1-B) are uncoupled from the bolts (15-A) and vice versa.
